# EUROPEAN PATENT SPECIFICATION

(11) **EP 1 432 594 B1**
(45) Date of publication and mention of the grant of the patent: **26.07.2006**
(21) Application number: 02766495.2
(22) Date of filing: 03.10.2002
(51) Int. Cl.: B60N 2/66, B60N 2/44

(54) **APPARATUS AND METHOD FOR RETURN ACTUATOR**
VORRICHTUNG UND VERFAHREN FÜR RÜCKSTELLUNGGERÄT
APPAREIL ET PROCEDE POUR ACTIONNEUR DE RETOUR

(30) Priority: 03.10.2001 US 970268; 07.11.2001 US 5662; 07.11.2001 US 5725
(43) Date of publication of application: 30.06.2004
(73) Proprietor: L & P Property Management Company, South Gate, CA 90280 (US)
(72) Inventor: LIU, Jintao, Windsor, Ontario N8R 1T8 (CA); STADLBAUER, Alfred, A-4040 Puchenau (AT)
(74) Representative: Banzer, Hans-Jörg
(86) International application number: PCT/US2002/031766
(87) International publication number: WO 2003/029043

(56) References cited:
- EP-A- 0 751 030
- WO-A-99/05000
- FR-A- 2 809 999
- US-A- 5 651 584
- US-A- 5 794 479
- US-A- 5 865 285
- US-B1- 6 230 867

## Description

### Cross-Reference to Related Applications:

This application claims priority to U.S. Patent Application Nos. 09/970,268, filed October 3, 2001;10/005,662 filed November 7, 2001; and 10/005,725 filed November 7, 2001.

### Background of the Invention

### Field of the Invention

The present invention is in the field of mechanical actuators, particularly tension or traction device actuators, especially as used in automotive or furniture ergonomic mechanisms such as lumbar supports.

### Prior Art

Ergonomic mechanisms such as lumbar supports are typically adjustable by mechanical means which may be activated and controlled at certain expense by motors, and at a lesser expense by levers, handwheels and the like. There is a continuing need for simplicity, durability and cost control in this area.

Ergonomic mechanisms are commonly designed to retain particular settings chosen by a repeat user for his or her individual comfort. Retaining an adjustment is often achieved by keeping a device like a lumbar support under pressure or tension, as by a traction cable. Settings need to be maintained through loading and unloading cycles, requiring brakes or locks for holding the settings. Serial adjustment must remain possible, requiring releases, overrides or clutches. In high volume markets such as automobiles or furniture, reducing costs and simplifying assembly of these multiple components are constant needs.

Simple levers are desirable adjustment devices, especially for automobiles. However, once a user selects a position for a device such as a lumbar support, the corresponding lever position frequently protrudes at an inconvenient angle. In automobiles, this can be particularly problematic in that clothing, seat belts and the like are easily caught on a lever that protrudes from the seat back where such levers are usually mounted. There is a need for a lever that can actuate an ergonomic mechanism like a lumbar support, maintain the selected position of it, and keep the lever in a home position where it is minimally intrusive.

US-A-5794479 discloses an adjusting mechanism for adjusting an adjustably movable member, such as the back of a vehicle seat. The adjusting mechanism comprises an adjusting element adapted to be connected to the adjustably movable member for producing an adjustment thereof, and a coupling operably connected to the adjusting element for moving the adjusting element. The adjusting element includes an actuating element, a release element, an elastic return element, and a connecting mechanism. The actuating element is arranged for movement in first and second opposite directions in response to the application of an actuating force acting thereon, e.g., a manual force acting on an actuating handle element. The release element is operably connected to the actuating element for movement therewith in the first and second directions. The elastic return element is operably connected to the release element for storing energy in response to the release element being driven in either of the first and second directions by the actuating element when acted upon by the actuating force, and for applying the stored energy as a restoring force to the release element for causing the release element to drive the actuating element in a return direction. The connecting mechanism operably connects the coupling to the adjusting element for driving the adjusting element when the actuating element and the release element are driven by the actuating force, and for releasing the coupling from the adjusting element when the actuating element and release element are driven in a return direction by the restoring force. One component of this adjusting mechanism is a coupling which is connected in an input-dependent manner. Such an input-dependent coupling has an output element and two input elements which are called a catch element and a release element. When a force acts on the catch element, the release element as well as the output element are moved independent of the direction of the force. If, however, a force acts on the release element, then only the release element and the catch element together move in the corresponding direction, and the driving force is not transferred to the output element.

There remains a continuing need in the art for reducing the size and the profile of the assembled actuator. There also remains a continuing need in the art for easing and streamlining assembly of the component parts of the actuator. Finally, there is a continuing need to reduce the number, and consequently the expense, of the components to be assembled into actuators.

### Summary of the Invention

The present invention is an actuator with an overrunning clutch and a lever return mechanism.

One embodiment of the present invention is a ratcheting, locking clutch actuator, particularly for selectively positionable ergonomic devices like lumbar supports. It uses a novel hanging scissors ratchet and lever to drive a geared shaft through a pre-selected number of degrees and thereafter return the lever to a home position.

Drive direction is selectable by a pair of facing ratchet pawls. Lever homing is by a biasing spring. The scissors ratchet is combined with a releasable, overrunning clutch and lock assembly.

Either a ratchet arm or a housing offsets the scissors ratchet from a drive shaft. The lever shaft is preferably co-axial with a drive gear, and also with a retaining ring and eccentric hub which comprise a clutch. The clutch hub is engaged with a pulley in a pulley housing, again in a preferably co-axial configuration. The pulley is tractively engaged with one end of a tensioning cable. The other end of the cable is operatively engaged with a ergonomic device, such as a lumbar support.

Turning the lever one or more times through a pre-configured arc advances the pulley one direction to draw the cable into a selected position. The locking hub retains the pulley cable at the selected position while the ratchet/spring assembly homes the lever. Turning the lever the opposite direction reverses the drive gear and shaft, releasing the locking clutch hub and paying out the cable via the counter rotating pulley until a second selected position is reached, whereupon the second position is again locked by the clutch hub and the lever again homed by the biasing spring.

Another embodiment of the present invention reduces the number of component parts, easing assembly and reducing the size of the assembled actuator. To achieve this, the drive gear and drive wheel of this embodiment have been combined. The clutch ring has been deployed such that its outer surface may be used for stepping the ratchet pawls.

A coil spring has been substituted for a leaf spring to return the lever arm. The ratchet
pawls, together with their pin assemblies, have been made symmetrical.

In another exemplary actuator, which is, however, not an embodiment of the present invention drive direction is selectable by a bi-directional clutch. Lever homing is by a biasing spring. The bi-directional clutch and homing lever are combined with the releasable, overrunning clutch and lock assembly.

Further features and advantages of the present invention, as well as the structure and operation of various embodiments of the present invention, are described in detail below with reference to the accompanying drawings.

### Brief Description of the Figures

Figure 1 is a perspective view of a typical ergonomic device―a lumbar support-with the return actuator of the present invention.
Figure 2 is an exploded view of the ratchet actuator embodiment of the present invention.
Figure 3 is a bisected side view of the ratchet actuator.
Figure 4 is an isometric view of the assembled ratchet actuator, without the lever arm or cable installed.
Figure 5 is an isometric view of the ratchet actuator with the lever arm housing removed in order to reveal the disposition of a scissors ratchet and its engagement with a drive gear.
Figure 6 is a top view of the ratchet actuator without the lever arm installed.
Figure 7 is a side view of the assembled ratchet actuator.
Figure 8 is a close up of the base housing and pulley.
Figure 9 is an exploded view of the scissors ratchet.
Figure 10 is a top view of the locking clutch.
Figure 11 is an exploded view of the locking clutch.
Figure 12 is an exploded view of a thin profile embodiment of the ratchet actuator of the present invention.
Figure 13 is a close up of the base housing and pulley for the thin profile embodiment.
Figure 14 is a top view of the scissors ratchet for the thin profile embodiment.
Figure 15 is a top view of the locking clutch for the thin profile embodiment.
Figure 16 is a perspective view of the thin profile ratchet actuator with the top housing removed.
Figure 17 is a perspective view of the locking clutch of the thin profile ratchet actuator.
Figure 18 is a perspective view of the thin profile ratchet actuator with the top housing and ratchet arm removed.
Figure 19 is an exploded view of a double clutch actuator, which is, however, not an embodiment of the present invention.
Figure 20 is a side view of the double clutch actuator.
Figure 21 is an isometric view of the assembled double clutch actuator, without the lever arm or cable installed.
Figure 22 is an isometric view of the double clutch actuator with the lever arm housing removed in order to reveal the disposition of the return wheel
Figure 23 is an isometric view of the double clutch actuator with the lever arm, housing and the return wheel removed in order to reveal the bi-directional clutch and return spring.
Figure 24 is a top view of the double clutch actuator without the lever arm installed.
Figure 25 is a top view of the double clutch actuator with the lever arm, housing and the return plate removed in order to reveal the bi-directional clutch and return spring.
Figure 26 is a top view of the locking clutch.
Figure 27 is an exploded view of the base housing and pulley.

### Detailed Description of the Present Invention

### Ergonomic Mechanism Operation-Prior Art

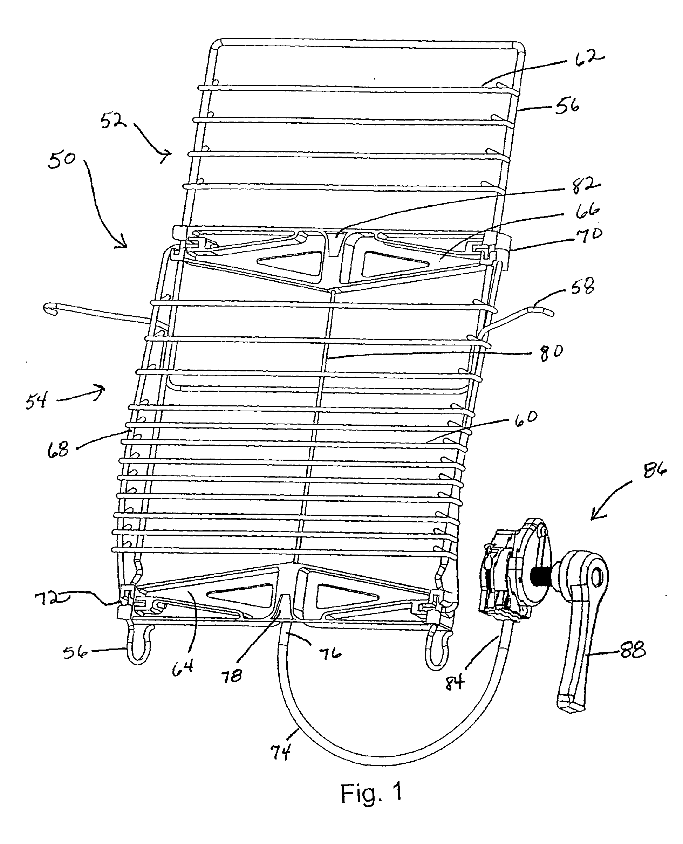

Referring to the figures where like reference numbers indicate like elements, Figure 1 is a perspective view of a typical ergonomic device―a lumbar support―with an actuator of the present invention installed. Lumbar support 50 has a fixed portion 52 and an arching portion 54. Guide rails 56 are mounted to a seat frame (not shown) with mounting mechanisms 58. A plurality of lateral elements 60 span the archable portion of the lumbar support and, in the pictured example, lateral elements 62 also traverse the fixed portion 52 of the lumbar support.

Also disposed on guide rails 56 are two brackets comprised of a fixed lower bracket 64 and sliding upper bracket 66. Two archable pressure surfaces 68 in this case metal rods, run generally vertically and, when flat, are generally parallel to guide rails 56. The archable pressure rods 68 are pivotally mounted to the upper bracket at pivot mounts 70 and pivotally mounted to the lower bracket 64 at pivot mounts 72. When upper bracket 66 is made to slide downwards towards lower bracket 64 pressure rods 68 are made to bow, which arches lateral elements 60 towards a seat occupant creating an arched lumbar supporting surface.

One of the most common mechanisms used to move mounting brackets 64 and 66 towards one another is a traction cable. Particularly common is a bowden cable, as depicted in Figure 1. The bowden cable is comprised of an outer, flexible sleeve 74 which retains and directs a wire 80 within the sleeve which can slide co-axially in and out of the sleeve. In Figure 1 the bowden cable sleeve 74 has an end 76 mounted to the lower bracket 64 at a bowden cable mounting bracket 78. Bowden cable mount 78 acts as a stop to bowden cable sleeve end 76 but allows sliding passage therethrough of bowden cable wire 80. Bowden cable wire 80 proceeds vertically upwards to where it is mounted to upper sliding bracket 66 at a traction cable mounting point 82. An opposite bowden cable sleeve end 84 is mounted at the actuator 86. The actuator applies traction to the bowden cable wire 80 when a seat occupant rotates the lever 88. The lever may alternatively be a handwheel or other device giving mechanical advantage. This tractive force draws the bowden cable wire 80 through the bowden cable sleeve 74 causing the bowden cable wire 80 to pull the sliding upper bracket 66 towards the first bowden cable sleeve end 76 which in this case pulls the sliding upper bracket 66 downwards towards the lower bracket 64 along guide rails 56. As described above, tractive movement of the upper mount 66 towards the lower mount 64 bows the pressure rods 68 outwards in a lumbar supporting arch.

Pressure rods 68 are biased towards their flat position. Accordingly, when there is no tension on bowden cable wire 80 the arching pressure surface 54 of lumbar support 50 returns to a rest position that is generally flat.

Hence, it is apparent that the most rudimentary function of any actuator is to draw the bowden cable wire 80 through the bowden cable sleeve 74. If an alternative flexible pressure surface is to be arched, for example a stamped metal plate, or molded plastic "basket" or riveted metal band lattice, a Bowden cable will still need to draw the two ends of the surface together. If an alternative traction device were elected as a design choice, the most rudimentary function of an actuator would remain to draw the tractive element, whether it is a rod, cable, or otherwise, in a direction applying tractive force to actuate the ergonomic mechanism. The present invention may be applied to any such tractive devices. In another alternative design choice, compressive pressure may be used to bow an archable surface. The present invention may likewise be used to drive such a compressive mechanism.

### The Ratchet Actuator

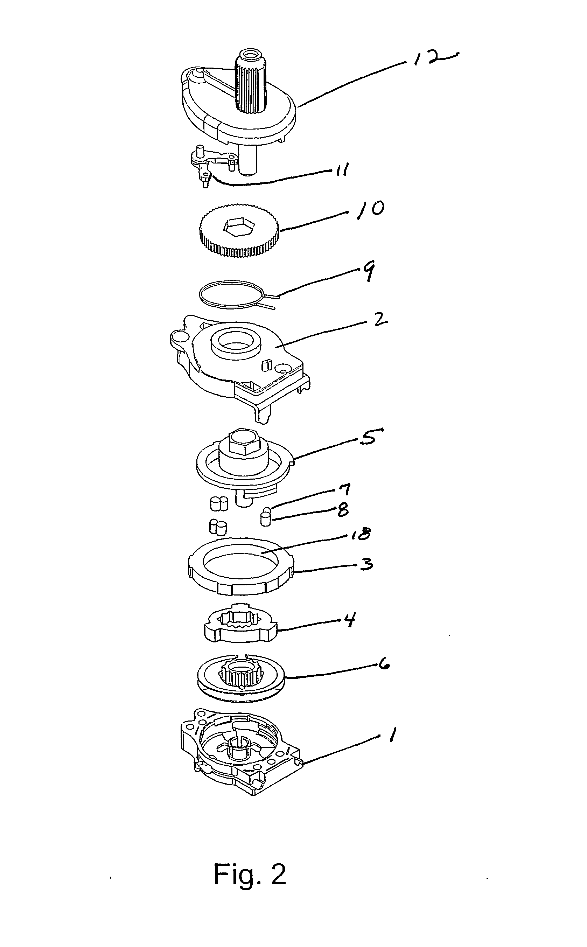

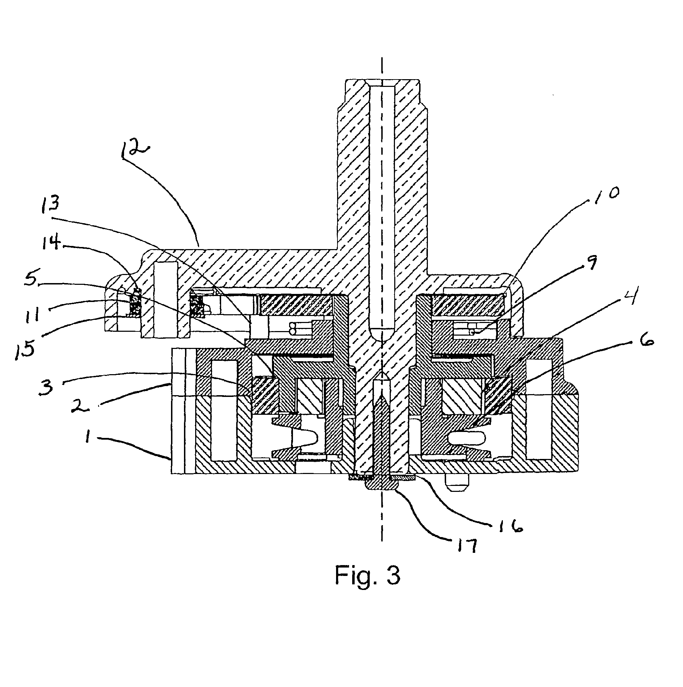

Figure 2 is an exploded view of a ratchet embodiment of the return actuator, 86, of the present invention. Figure 3 is a bisected side view of the ratchet actuator of Figure 2 showing all elements except the scissors ratchet, 11, and the lock rollers and springs, 7and 8. In the depicted embodiment of the present invention, all the elements shown in Figure 3 are co-axial.

Base housing, 1, cradles in it pulley, 6, eccentric hub, 4, and ring, 3. Ring, 3, has an inner surface, 18. Eccentric hub, 4, has three bosses whose outer edge are in rotating, sliding communication with the inner surface, 18, of ring, 3. The bosses define between them three spaces. The edge of eccentric hub, 4, in these spaces is a cam. When assembled with ring, 3, the spaces between the cam edge of the eccentric hub and the inner surface, 18, of ring, 3 form a constricting channel. In assembly, three pairs of steel rollers, 7, and rubber grommets, 8, are deposed in each of the three spaces between eccentric hub, 4, and ring, 3.

Onto the top of this assembly is placed disk, 5, with downward projecting fingers that also are interposed into the three spaces between eccentric hub, 4, and ring, 3. This assembly of hub, 4, ring, 3, rollers, 7, grommets, 8, and disk, 5, comprise a locking, overrunning clutch, which is to be described in greater detail below.

The locking clutch assembly is encapsulated by closure of top housing, 2, with base housing, 1. On top of top housing, 2, is disposed a homing spring, 9, then a drive gear, 10, and lever arm housing, 12. Lever arm housing, 12, has a toothed shaft onto which the lever arm, 88, (not shown) is fixed. Hanging from the lever arm housing, 12, by a post (not shown) is a scissor ratchet, 11. The center of drive gear 10 is a hexagonal nut for receiving installation of a hexagonal bolt extension of a drive disk described below.

Screw, 17, with washer 16 (not shown in Figure 2) or a bolt, rivet or other fixator holds base housing, 1, together with a lower shaft extension of lever arm housing, 12.

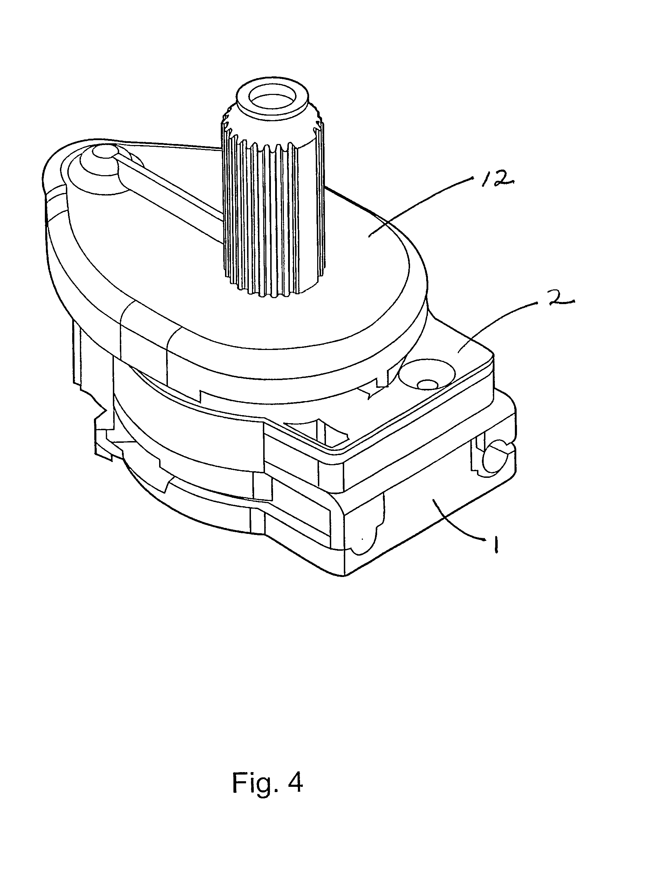

Figure 4 is an isometric view of the ratchet actuator, 86, of Figure 2, assembled without the lever arm or bowden cable installed.

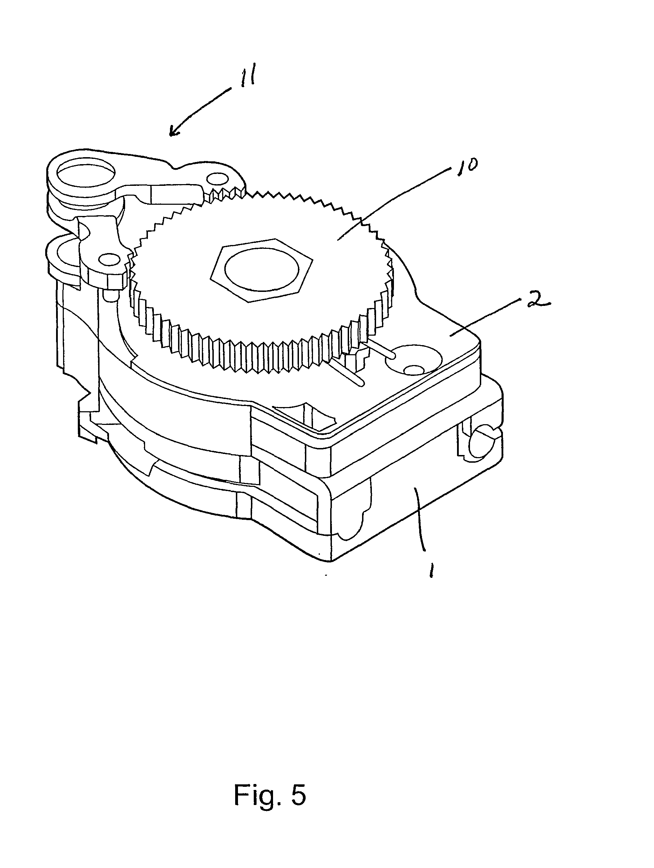

Figure 5 is an isometric view of the actuator, 86, with the lever arm housing, 12, removed in order to reveal the disposition of the scissors ratchet, 11 and its engagement with drive gear, 10.

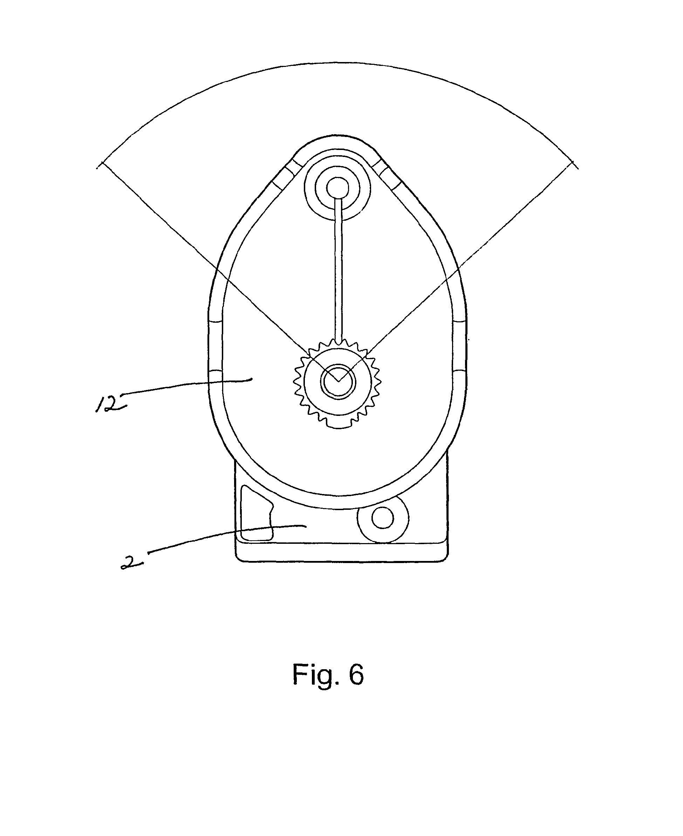

Figure 6 is a top view of the actuator, 86, without the lever arm installed. Figure 6 discloses the pre-configured degree of arc through which the lever arm may be turned by a seat occupant. In the depicted embodiment, the lever, 88, may be turned 45° in either direction.

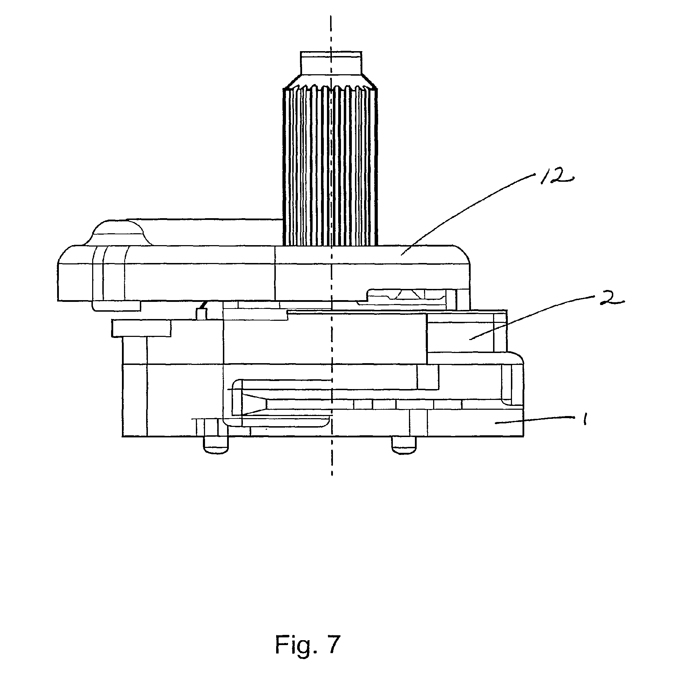

Figure 7 is a side view of the actuator, 86, as assembled.

### Base Housing and Pulley Assembly

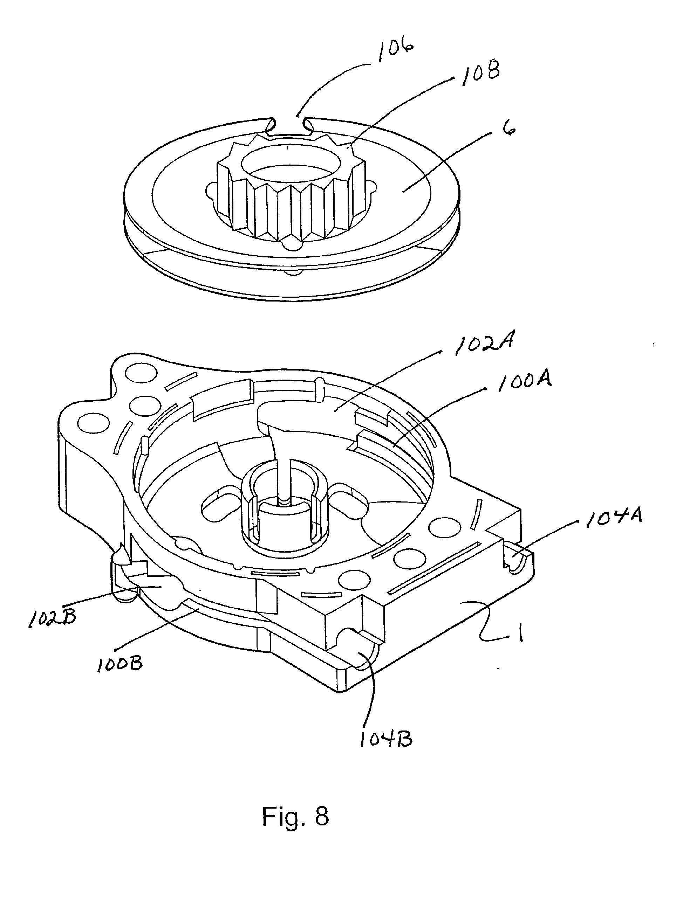

Figure 8 is a close up of the base housing, 1, and pulley, 6. The bowden cable (not shown) is assembled with the pulley, 6, and base housing, 1 as follows. Either of slots, 100A or 100B, allow insertion of a bowden cable wire, 80 (or other traction wire) into the base housing, 1. Wider portions, 102A and 102B, of slots 100, allow insertion of a cable wire end stop. Exit holes, 104 serve as both passage ways for travel of the bowden cable wires, 80, and as stops for bowden cable sleeve ends, 84. The corresponding opposite slots and exits, 100B, 102B and 104B, on opposite sides of base housing, 1 allow for reverse installation of a bowden cable wire, so that the ratchet actuator may be installed for actuating either clockwise traction or counterclockwise traction in order to accommodate seat design flexibility such as would be useful in installing mirror image actuators on outboard sides of both a driver's and a passenger's side seat.

Pulley, 6, has a notch, 106, for receiving installation of the bowden cable wire end stop. The bowden cable wire, 80, would then be wrapped partially around pulley, 6, and lead out through either exit hole, 104. In this configuration, rotation of pulley, 6, wraps the bowden cable, 80, further around pulley, 6, which effects a shortening of the bowden cable wire, 80, at the opposite end of the bowden cable, 80. This shortening also draws the bowden cable wire, 80, through the bowden cable sleeve, 74, applying the desired traction to the ergonomic mechanism to which the other end of the bowden cable wire, 80, and bowden cable sleeve, 74, are attached.

Pulley, 6, further has a cylindrical extension, 108, with notches corresponding to a central hole in locking hub, 4, for a rotationally fixed assembly of pulley, 6, with hub, 4.

Alternatively, rotational force transferred by the ratchet and clutch combination of the present invention could be converted into tractive force by mechanisms besides a pulley and cable, as, for example, a rack and pinion or a cam and push rod. This applies to all embodiments of return actuators disclosed herein.

Referring back to Figures 1 and 2, in operation a seat occupant turns lever arm, 88, which rotates lever arm housing, 12. Rotation of lever arm housing, 12, moves scissors ratchet, 11, along its arcuate path, causing its ratchet teeth to engage with drive gear, 10. The hexagonal hole in drive gear, 10, engages with the hexagonal nut extension of disk, 5, thereby driving disk, 5, in the same rotational direction as drive gear, 10. The downwardly disposed fingers of disk, 5, engage the bosses of eccentric hub, 4, also driving it in the same rotational direction as disk,5, and drive gear, 10. Eccentric hub, 4, through notched extension, 108, of pulley, 6, drives pulley, 6, in the same rotational direction. Rotation of pulley, 6, either draws in or plays out bowden cable wire, 80, which is partially wrapped around pulley, 6, through one of the holes, 104, of base housing, 1. Accordingly, tension on bowden cable wire, 80, is increased or decreased causing a corresponding narrowing or widening of the space between mounting brackets, 66 and 64, on lumbar support, 50, which in turn increases or decreases an arch in pressure rods, 68.

### The Scissors Ratchet

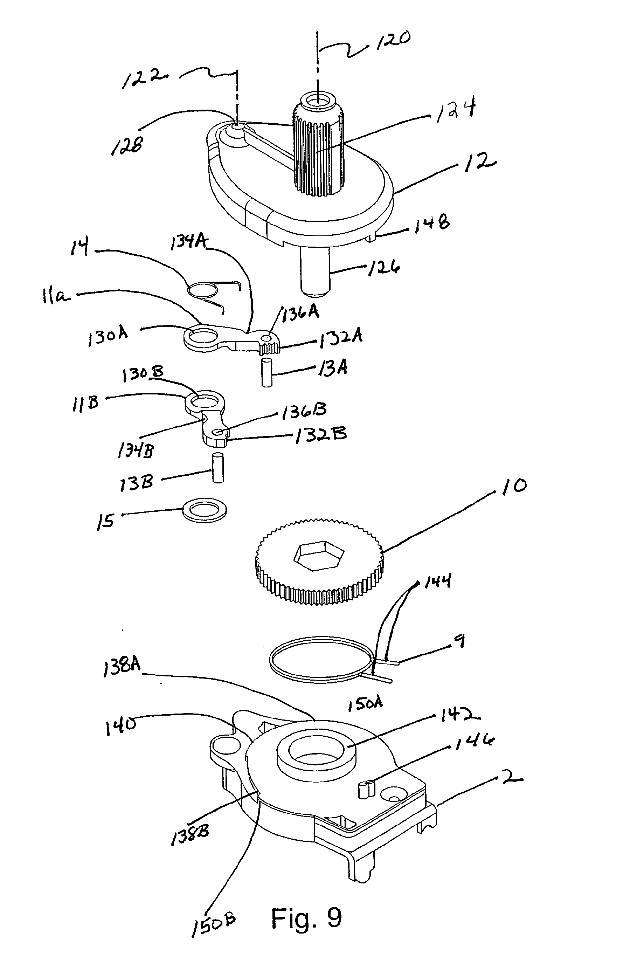

Figure 9 is an exploded view of the scissors ratchet, 11, of Figure 2. Lever arm housing, 12, has a drive axis, 120, and a scissors ratchet post axis, 122, which is offset from the drive axis, 120. The lever arm housing, 12, has a toothed, drive axis upper shaft, 124, which is designed to receive fixation of the lever arm, 88, (not shown). Lever arm housing, 12, also has a drive axis lower shaft, 126, which extends through all the co-axial drive axis elements of the ratchet actuator, 86, and fixes them together by means of a screw (17, Figure 3) and washer (16, Figure 3). Disposed on drive axis, 120, and between the lever arm housing, 12, and the upper housing, 2, are drive gear, 10, and homing spring, 9. Alternatively, other biasing mechanisms may be used to bias the lever to a neutral position.

A post (not shown) is disposed within a hole, 128, in lever arm housing, 12, along ratchet axis, 122. On this post are disposed the various components of the scissors ratchet, 11, all of which are held in place by a toothed lockwasher, 15. The post does not contact the drive gear, 10, top housing, 2, or other components. This hanging disposition allows the post to swing freely through an arc.

The scissors ratchet, 11, is comprised of two ratchet pawls, 11A and 11B, two pins, 13A and 13B, and a spring, 14. Ratchet pawls, 11A and 11B, are mirror images of each other in the sense that their teeth face in opposite directions. Each pawl, 11A and 11B, has a post end, 130A and 130B respectively, with a hole, for installation on the ratchet post. The pawl post ends, 130A and 130B, are stepped in a complementary fashion such that the pawls will be disposed in the same plane. Also in the same plane is drive gear, 10. Accordingly, ratchet pawl teeth, 132A and 132B, are disposed to engage the teeth of drive gear, 10. The spring, 14, also disposed on ratchet post, biases ratchet pawl teeth, 132A and 132B, into engagement with the teeth of drive gear, 10. The spring, 14, has ends which engage with notches, 134A and 134B, in each of ratchet pawls, 11A and 11B, respectively.

In order that the scissors ratchet, 11, selectively rotate drive gear, 10, in either a clockwise or counterclockwise direction, a mechanism is incorporated in the present invention to selectively engage one and disengage the other of the ratchet pawls, 11A and 11B. This mechanism is comprised of the engagement of ratchet pawl pins, 13A and 13B, with corresponding steps on top housing, 2. Each pin, 13A and 13B, is inserted into a corresponding hole, 136A or 136B, in the toothed end of each corresponding ratchet pawl, 11A and 11B. Pins, 13A and 13B, are inserted into holes, 136A and 136B, and extend in a downward direction. Pins, 13A and 13B, are longer than drive gear, 10 is thick. Accordingly, pins, 13A and 13B, extend downwards into engagement with steps on top housing, 2.

Top housing, 2 has two lower steps, 138A and 138B, and one upper step, 140. The biasing action of spring, 14, not only maintains engagement of one of the ratchet pawl toothed ends, 132A or 132B, with the teeth of drive gear, 10, but also maintains a sliding contact between pins 13A and 13B, and the steps, 138 and 140, of top housing, 2. The arcuate distance of steps, 138 and 140, are pre-configured such that when rotation of lever arm housing, 12, moves the scissors ratchet assembly either clockwise or counterclockwise in order to bring tooth ratchet pawl ends, 132A or 132B, into driving engagement with the teeth of drive gear, 10, the arcuate travel of lever arm housing ratchet axis, 122, slides the pin, 13, of the opposite scissors ratchet pawl, 11, along the lower step, 138, until the pin meets, engages, and is driven radially outward by the upper step, 140. For example, if the seat occupant pushes the lever in a direction that is clockwise looking down on the assembly in Figure 9, ratchet pawl, 11A, will have its teeth, 132A, brought into engagement with the teeth of drive gear, 10. At the same time engaging ratchet pawl, 11A, will have its pin, 13A, engaged with lower step, 138A, which is dimensioned to allow the engagement of the teeth. This engagement is maintained by the biasing action of spring, 14. This same degree of rotation will slide the opposing ratchet pawl pin, 13B, along the opposing lower step, 138B, until it engages upper step, 140. Upper step, 140, is at a radius from drive axis, 120, that is greater than the radius of lower steps, 138. Accordingly, upper step, 140, will bias pin, 13B, and the ratchet pawl, 11B, away from the drive axis, 120, and therefore out of engagement with the teeth of drive gear, 10.

One of the advantages of all embodiments the present invention is that the lever, 88, returns to an unobtrusive "home" position after driving the drive gear, 10. The lever arm, 88, is "homed" by returning the lever arm housing, 12, to its original position. Through its locked fixation with lever arm housing shaft, 124, the lever, 88, and lever arm housing, 12, move in unison. Although the ratchet actuator of the present invention can be installed in any fashion, it is conceived that the home position of the lever arm, 88, will be conveniently disposed, most likely parallel to the back of a seat.

The lever arm housing, 12, is driven to its home position after a drive rotation by homing spring, 9. Homing spring, 9, is deposed on top of top housing, 2, and around top housing circular extension, 142. Symmetrical pressure arms, 144, of spring, 9, are disposed on either side of top housing boss, 146, and also on either side of lever arm housing boss, 148. When the lever arm, 88, and lever arm housing, 12, are in the home position, bosses, 146 and 148, are aligned along the same radius from drive axis, 120. In this position, spring, 9, is at rest and without tension. When the seat user rotates the lever arm, 88, and lever arm housing, 12, the lever arm housing boss, 148, is rotated out of its radial alignment with top housing boss, 146, and brought into contact with one or the other of pressure arms, 144 of spring, 9. The rotation of the lever arm housing, 12, puts spring, 9, under dynamic tension. After the seat occupant has taken the lever arm housing, 12, through its desired arc and releases pressure on lever arm, 88, the spring, 9, is free to apply its pressure to lever arm housing boss, 148, in order to push it back into alignment with top housing boss, 146. In the process, rotating lever arm housing, 12, and lever arm, 88, are brought back into the home position.

Top view figure 6 illustrates that the present invention can be pre-configured to allow lever arm, 88, to rotate 45 degrees in either direction. This corresponds to 8 millimeters of arcuate rotation of the pulley, 6, at the radius at which the bowden cable, 80, is seated in the preferred embodiment. The total travel distance of the bowden cable wire, 80, is limited to 32 millimeters. Accordingly, to move the bowden cable, 80, and lumbar support the full 32 millimeters, four full 45 degree rotations of the lever arm are required. The 45 degree limitation is created by stopping pins, 13A or 13B, at a travel end stop of the top housing lower steps, 138, at stop, 150.

### The Locking Clutch Assembly

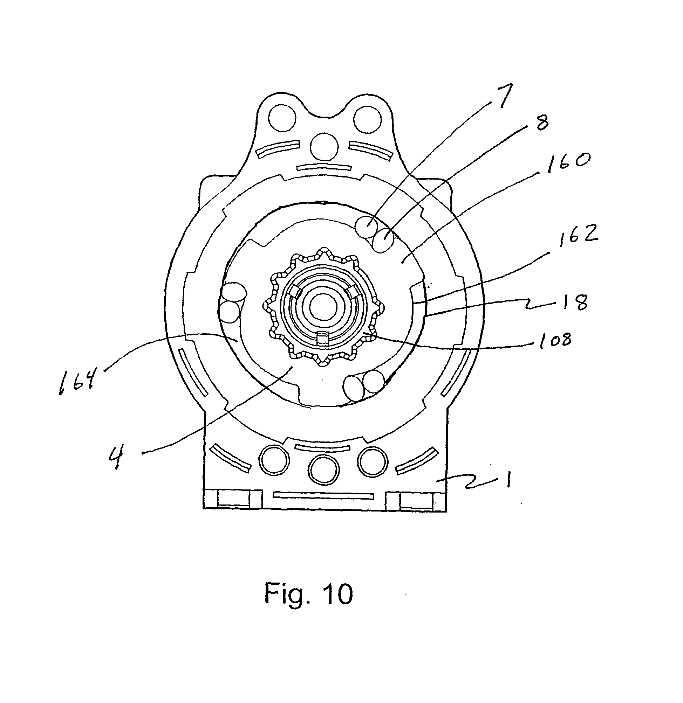

Figure 10 is a top view of the assembled locking hub, overrunning clutch of the present invention. Top housing 2 and the components above it are removed. Visible in Figure 10 are base housing, 1, hub, 4, steel rollers, 7, and rubber grommets, 8, as well as ring, 3. Pulley, 6, is below the locking hub, 4, and ring, 3. Only the top shaft extension 108 of pulley, 6, is visible in Figure 10. The notches of shaft extension, 108, interlock with hub, 4.

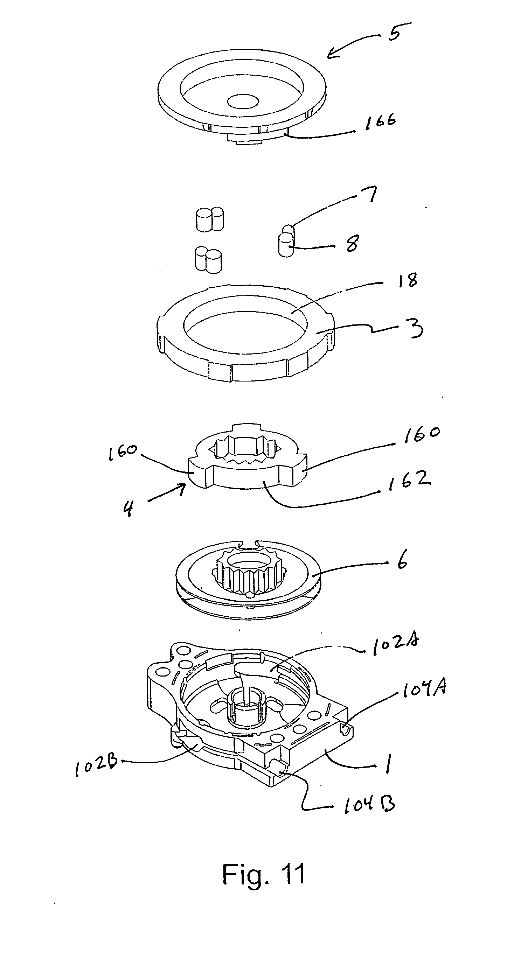

Hub, 4 has, preferably, three bosses, 160. Any number of bosses may be used. The top of these bosses comprise an outer radius of hub, 4, which is disposed in rotating, sliding cooperation with the inner surface 18 of ring, 3. The edge, 162, of hub, 4, between bosses, 160, has a radial distance from the center of hub, 4, that is less than the outer or top surface of bosses, 160. As assembled, this inner surface of the edge, 162, of hub, 4, combines with the inner surface, 18, of ring, 3, to form constricting spaces, 164. Disposed within these spaces are rubber grommets, 8, steel rollers, 7, and the downward protruding fingers, 166, of drive disk, 5, (See, Figure 11). Hub edge, 162, is preferably arcuate, but may be generally flat, provided that the space it defines when assembled with ring, 3, is a constricting channel. Alternatively, the inner surface, 18, of ring, 3, may be eccentric. Another alternative is to eliminate ring, 3, altogether and use an inner surface of the housing to define the operative space.

In Figure 10, spaces, 164 are narrower at their counterclockwise extremity than they are at their clockwise extremity. Rubber grommet 8 is disposed at the extreme clockwise extremity of spaces, 164, where, preferably, it seats into a corresponding convexity in the side wall of bosses, 160. Proceeding along each space, 164, in a counter-clockwise direction, after rubber grommets, 8, steel rollers, 7, are disposed within spaces, 164, followed by the fingers, 166, of drive disk, 5. At their clockwise extremity, spaces, 164, are wider in the radial direction than the diameter of either steel rollers, 7, or rubber grommets, 8. Accordingly, hub, 4, can be freely moved in a counter-clockwise direction. However, space, 164, is radially narrower than the diameter of steel roller, 7, at the counter-clockwise extremity of each of spaces, 164. Accordingly, if hub, 4, is rotated in a clockwise direction, at some point between the clockwise extremity of space, 164, and the counter-clockwise extremity of space, 164, steel roller, 7, will become unable to fit between the inner surface edge, 162, of hub, 4, and the inner surface, 18, of ring, 3. At that point the steel roller will jam or "lock" and prevent further rotation of the hub, as well as all components attached to it, specifically pulley, 6, from proceeding any further in the clockwise direction. This is the locking feature of the hub, 4, and ring, 3, clutch assembly.

Hub 4 is turned by drive disk fingers 166, best seen in Figure 11.

The point at which roller, 7, locks may be anywhere between grommet, 8, and drive disk finger, 166. Preferably, the locking point is close to the free or resting position of roller, 7, as depicted, in order that the clutch have a quick locking response and little "play."

Rubber grommets, 8, are disposed between bosses, 160, and steel rollers, 7. Their purpose is to act as a spring, biasing the steel rollers towards that point in the space, 164, at which they lock and prevent further rotation of hub, 4. This biasing prevents an undesirable back rotation of the assembly after the seat occupant releases the lever arm 88. Biasing the steel rollers, 7, to a point at or near where they lock also minimizes back rotation or "play" after a drive rotation of the lever arm, 88. This maximizes the useful portion of the drive arc of the lever arm, 88. Although rubber grommets are preferred as springs, coil, leaf or other types of springs would be equivalent alternatives. Rubber grommets, 8, and steel rollers, 7, are preferably cylindrical although other shapes, such as ball bearings, would be equivalent alternatives.

As mentioned, drive disc, 5, has fingers, 166, which also extend downward into space, 164. These fingers are disposed to abut bosses, 160, on the boss side opposite the rubber grommet. In operation, when the lever arm, 88, is rotated by a seat occupant in a counter-clockwise direction, the fingers, 166, of drive disc, 5, are brought into driving contact with the bosses, 160. This rotational force drives hub, 4, counter-clockwise, widening gap, 164, relative to steel roller, 7, and releasing it. Continued rotation of the drive disc, 5, pushes the hub, 4, and pulley, 6, through the pre-configured degrees of arcuate turning of the ratchet actuator, 86. Upon reaching the end of the rotating arc, preferably 45 degrees, pressure is released from fingers, 166, of drive disc, 5, when the seat occupant releases the lever arm, 88. The tension in the lumbar support biases the bowden cable wire, 80, and pulley, 6, to which it is attached in a reverse or clockwise direction. However, travel of the assembly in the reverse or clockwise direction is halted by the nearly immediate locking of the steel roller between the locking hub edge, 162, and inner surface, 18, of ring 3. In this fashion, the seat occupant may continue to ratchet the actuator until a desired degree of lumbar support arching is reached, and then release the lever arm. Then the lever is homed by spring, 9, while locking hub, 4, and pulley, 6, remain held in place by a steel rollers, 7.

The weight of the seat occupant biases the lumbar support towards the flat position and keeps the bowden cable wire, 80, under tension. In order for a seat occupant to flatten an arched lumbar support, the lever arm, 88, must be pushed in the opposite direction. This has the effect of rotating the fingers, 166, of drive disc, 5, in the clockwise direction where they come into contact with steel roller, 7, and force them out of their locked position, thereby allowing the pre-existing tension in bowden cable wire, 80, to cause an unwinding of pulley, 6, corresponding to a clockwise rotation in hub, 4, which is unimpeded by locking of the steel roller, 7, for so long as the fingers, 166, of drive disc, 5, maintain clockwise pressure on steel roller, 7. Of course a passenger can achieve the same effect by pushing the lever.

With hub, 4, installed in this orientation, bowden cable wire, 80, attaches to pulley, 6, through hole and slot assembly, 100A, 102A and 104A. Reversing orientation is simply a matter of turning over hub, 4, during assembly, rotating notch, 106, in pulley, 6, and installing bowden cable wire, 80, through the opposite slot, 106B, 102B and 104B. In this second orientation, clockwise is the drive direction and counterclockwise is the locked direction.

The overall travel length of the Bowden cable wire, 80, around pulley, 6, is limited by stops, 168, in step, 170 located along the edge of drive disc, 5, as seen in Figure 11, and corresponding to stops located on the underside of top housing, 2, (not visible).

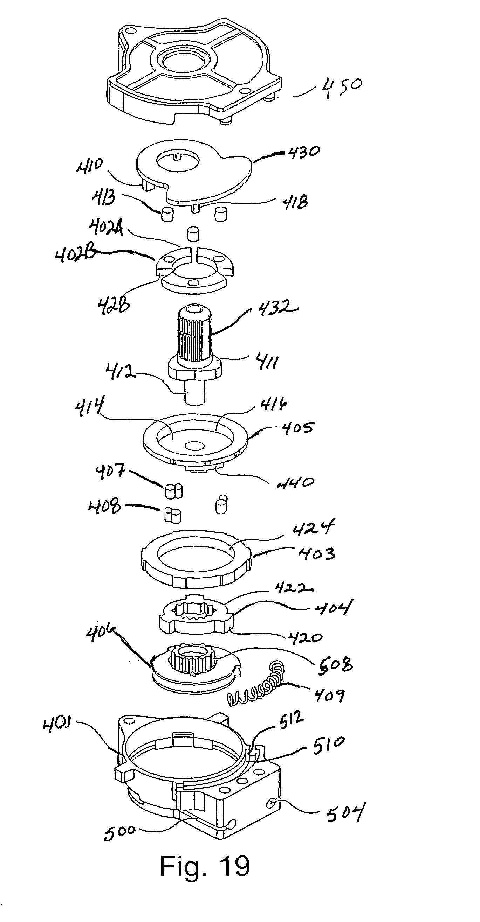

Drive disc 5 may have an upwards extending shaft, which extends through a central drive axis hole in top housing, 2, in order to bring hexagonal faces, of shaft, into interlocking, driveable fixation with a drive gear, 10, as in Figure 2, or drive disk 5 may not have such a shaft, as in a double clutch embodiment or as depicted in Figure 19.

### The Thin Profile Embodiment

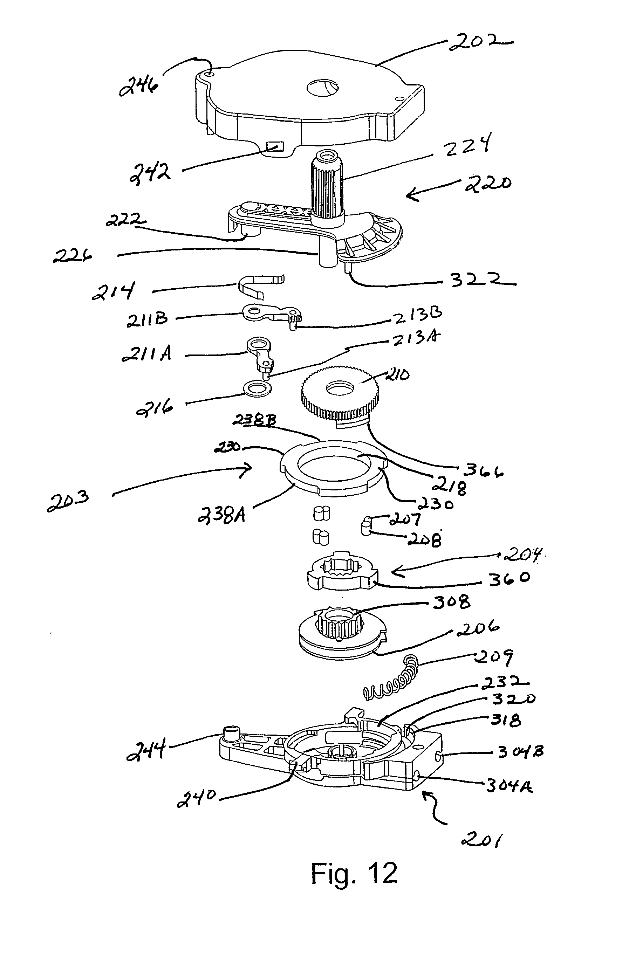

Figure 12 is an exploded view of a thin profile improvement of the ratchet actuator of the present invention. The assembled parts are encapsulated between base housing, 201, and top housing, 202. Base housing, 201, has a seat for receiving pulley, 206. Cable (not shown) is attached to pulley, 206, and exits base housing at exit aperture, 304A or 304B. This much of the base housing pulley assembly operates with the structure as described above.

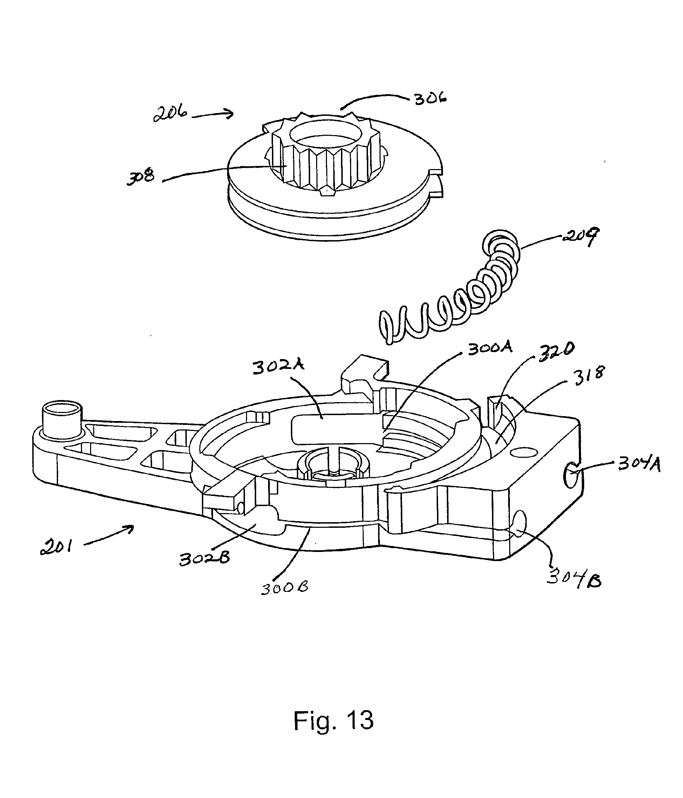

In this embodiment, as best seen in Figure 13, base housing, 201, also has an arcuate channel, 318, for receiving return biasing coil spring, 209. Retaining seats, 320, at either end of channel, 318, hold return biasing coil spring, 209, in place with only a slight degree of compression. This channel configuration, combined with the coil spring, is easy to assemble, since the coil spring, 209, need merely be placed in channel, 318. Leaf springs typically have to be held in place between two other components while those components are assembled (such as the ratchet arm housing and upper housing of the previously depicted embodiments).

Seats, 320, incorporate slots which are thinner than the diameter of coil spring, 209. These slots receive ratchet arm fingers, 322, when a seat occupant turns the lever (not shown) and consequently turns ratchet arm, 220. This action of moving ratchet arm fingers, 322, into compression of spring, 209, loads the spring. When the seat occupant releases the lever, spring, 209, expands, pushing finger, 322, and consequently ratchet arm, 220, back to its home position.

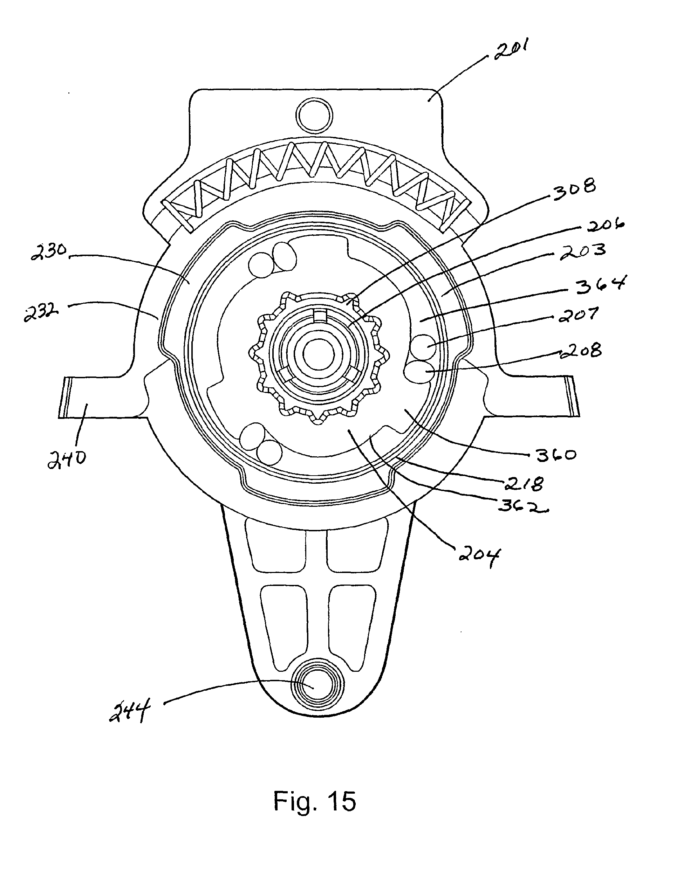

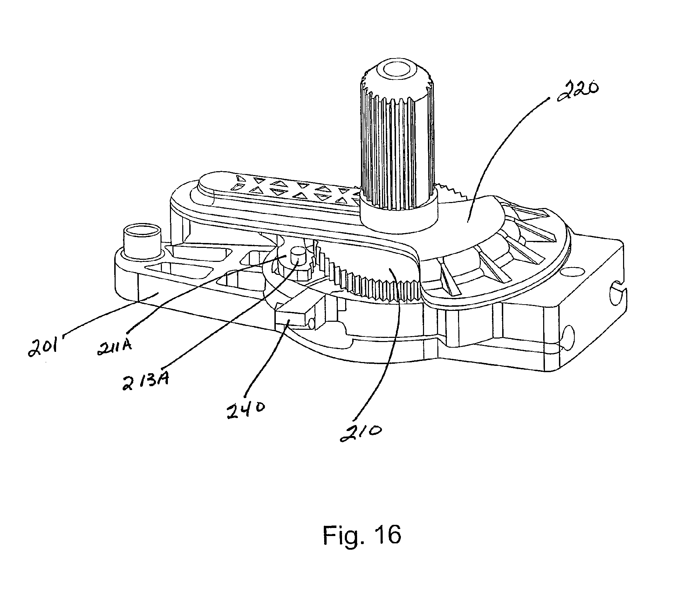

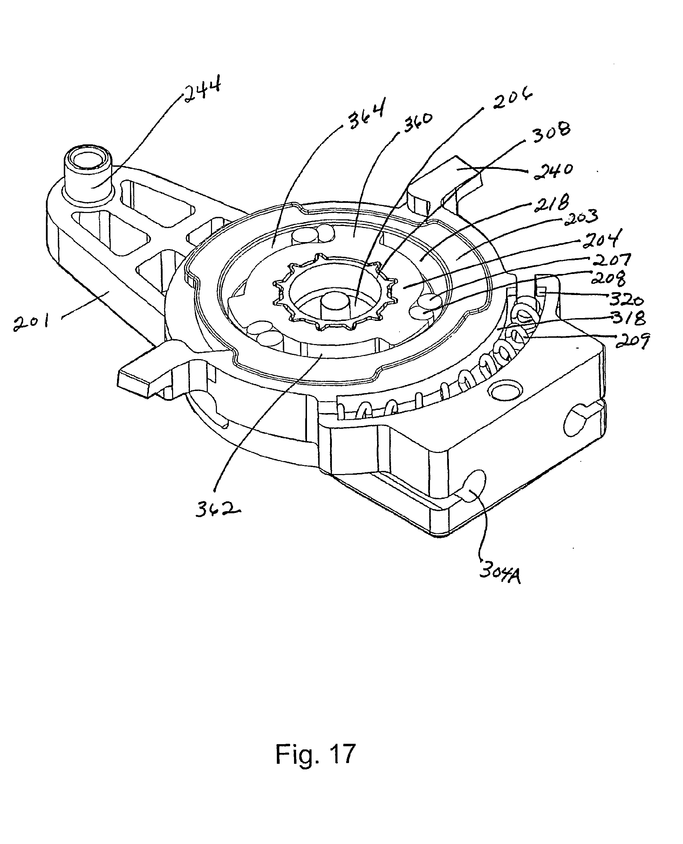

The operation of hub, 204, rubber grommets, 207, and rollers, 208, in their interaction with the inner surface, 218, of ring, 203, is as previously described for the locking clutch assembly, and are shown installed with the thinner embodiment housing in Figures 12 through 18.

Ring, 203, has three bosses, 230 on its outer aspect. These correspond to seating detents, 232, in base housing, 201. Once assembled, the detents, 232, serve to retain ring, 203, in a fixed position.

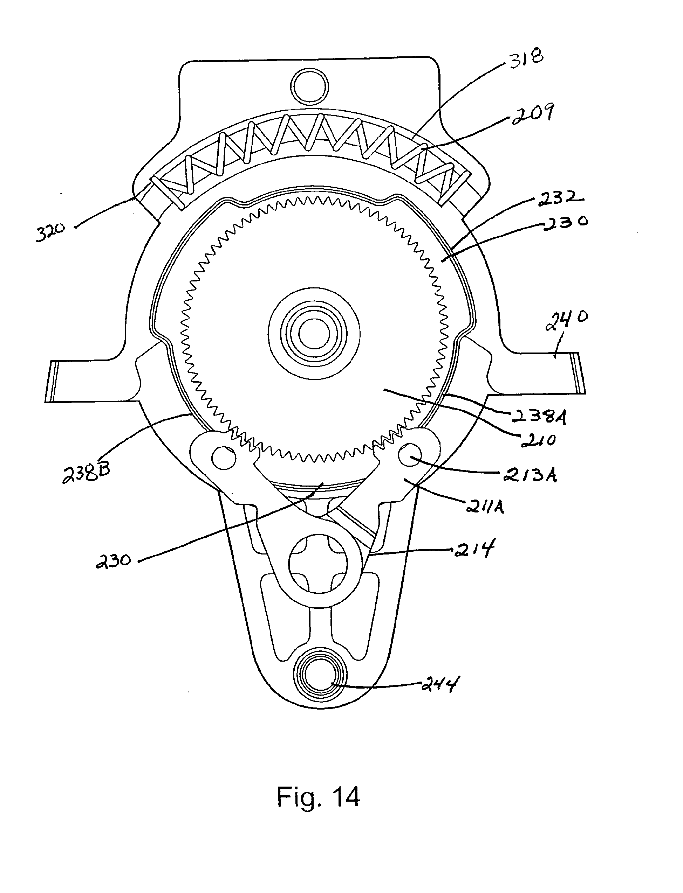

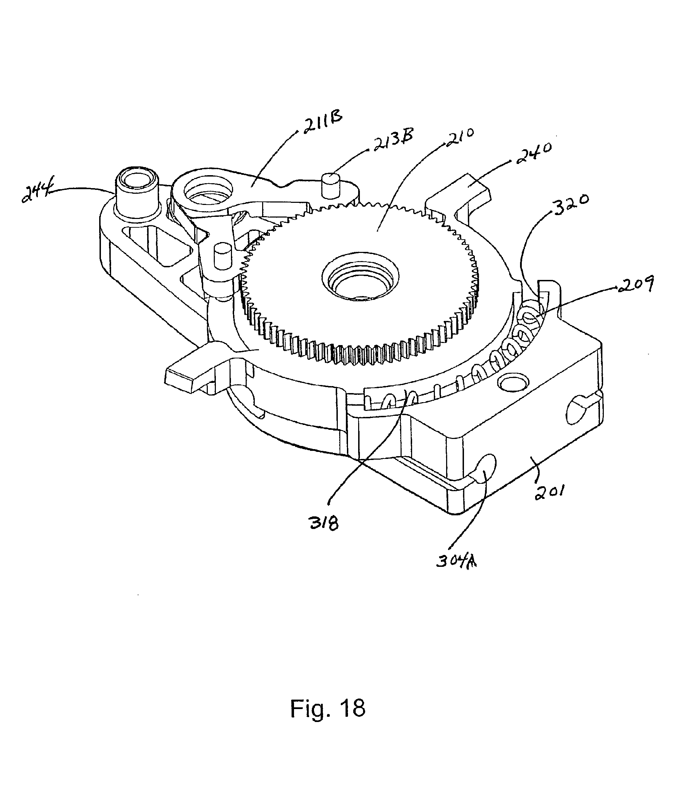

In the present thinner embodiment, ring bosses, 230, are also used as steps to mediate the travel of pawls, 211A and 211B. As is also seen in Figures 14 and 18, bosses, 230, engage and disengage scissors ratchet pawls, 211A and 211B, via sliding contact with scissors pawl pins, 213A and 213B. The bosses, 230, of ring, 203, become the high step to disengage the non-driving scissor pawl arm by holding the non-driving scissors pawl arm away from the drive gear teeth on drive gear, 210, while the other scissors pawl is in driving engagement with the teeth of drive gear, 210. The disengagement is maintained by the greater radius of the high step, 230. Ring, 203, has detents, 238A and 238B, on either side of boss, 230. These comprise the low steps. The driving ratchet pawl pin remains in sliding engagement with low step, 238A or 238B. Contact between the high step, 230, and the low steps, 238A and 238B, of ring, 203, and the ratchet pawl pins, 213A and 213B, is made possible by raising the seating of ring, 203, above the base housing, 201. Base housing seating detents, 232, receive ring, 203. However, seating detents, 232, are not as deep as ring, 203, is tall. Accordingly, the height of ring, 203, extends above the height of base housing, 201. Ring, 203, extends high enough to bring its outer surface components, high step, 230, and low steps, 238A and 238B, into sliding contact with ratchet pawl pins, 213A and 213B. Accordingly, an intermediate housing with steps for mediating the travel of ratchet pawls has been entirely eliminated, thus thinning the profile of the improved ratchet actuator of the present invention.

The size of the improved ratchet actuator of the present invention is further reduced by combining the drive wheel and drive gear of the previous embodiment into a single part, as seen in Figures 12 through 18. Drive gear, 210, is circumscribed by teeth to receive driving engagement with the teeth of ratchet pawls, 211A and 211B. From this same drive gear, 210, descend the fingers, 366, which extend downward into operative engagement with the locking hub, 204, grommets, 207, and rollers, 208, of the locking clutch assembly.

The elimination of components by combining their operative aspects into fewer parts reduces costs, eases assembly, and reduces the overall size of the improved ratchet actuator of the present invention.

Assembly has been eased further by improving the design of the ratchet pawl pins, 211A and 211B. They are symmetrical. In their assembly with pins, 213A and 213B, they remain symmetrical. Pins, 213A and 213B, extend an equal distance above and below pawls, 211A and 211B. Accordingly, an assembler need not distinguish left and right ratchet pawl pins, but need only turn one of the ratchet pawls over to create the scissors pawl assembly of the present invention. The scissors pawls are disposed on post, 222, of ratchet arm, 220. They are held in place by locking washer, 216.

Pawl biasing spring, 214, eases assembly of the present invention relative to prior embodiments by being a band spring. Prior art leaf springs required its own insertion onto ratchet post, 222, and followed by simultaneous engagement with pawls, 211A and 211B, as pawls, 211A and 211B, were also disposed on post, 222. Assembly of the improved ratchet actuator of the present invention is by sliding ratchet pawls, 211, onto post, 222, and afterwards snapping into place the band spring, 214.

Ratchet arm, 220, has a drive shaft, 224, that extends through a hole in top housing, 202, to receive fixed attachment to a lever arm (not shown). Internalization of the support for the hanging scissors pawl ratchet protects these moving parts from jamming, interference or contamination. Ratchet arm, 220, has a shaft, 226, extending through the axis of the parts below, including the base housing, 201, to where it receives anchoring screw, (not shown). Tabs, 240, on base housing, 201, are snapped into slots, 242, in top housing, 202, for final assembly. Also, base housing post, 244, engages top housing post hole, 246, to further secure the assembly of the ratchet actuator and encapsulate the moving scissors pawl.

In operation, a seat occupant turns lever arm (not shown), which turns ratchet arm, 220, which through scissors pawl post, 222, brings a ratchet pawl, 211A, into driving engagement with gear, 210. Biasing spring, 214, maintains ratchet pawl post, 213A, in sliding engagement with low step, 238A, of ring, 203. Opposing ratchet pawl, 211B, is maintained in a disengaged position from the teeth of drive gear, 210, by sliding engagement of post, 213B, with high step, 230, of ring, 203. The driven rotation of gear, 210, causes drive gear fingers, 366, to push rollers, 208, and grommets, 207, against bosses, 360, of locking hub, 204. This turns pulley, 206, which is in fixed engagement with locking hub, 204. Turning pulley, 206, pulls the cable (not shown) through an exit aperture, 304A or 304B.

Rotation of ratchet arm, 220, also drives ratchet arm finger, 322, into compression of return biasing coil spring, 209. When the seat occupant releases the lever arm (not shown) the locking wedge action of the cam surfaces of locking hub, 204, holds locking hub and pulley, 206, at the degree of rotation selected by the seat occupant with the lever arm. Ratchet arm, 220, remains free to move, however, and is driven to move to its home position by the expanding action of return biasing coil spring, 209, which pushes ratchet arm, 220, home through its expanding engagement with ratchet arm finger, 322.

### The Double Clutch Actuator

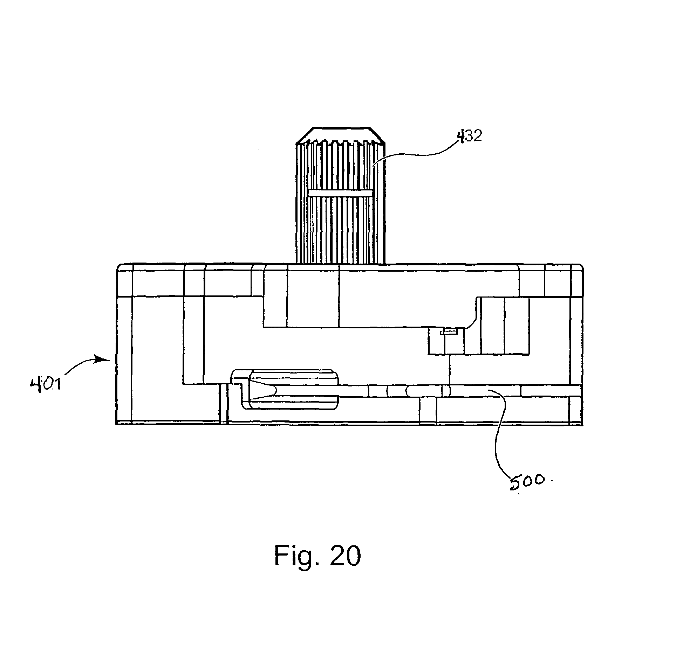

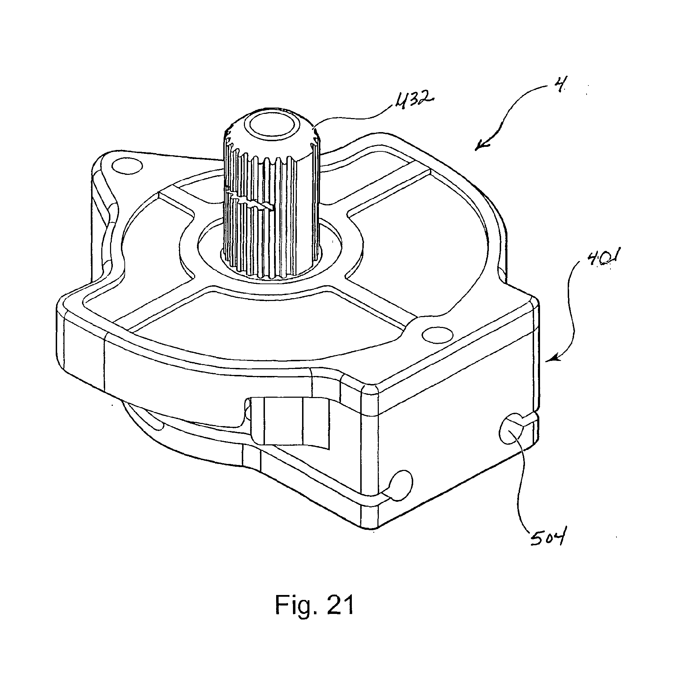

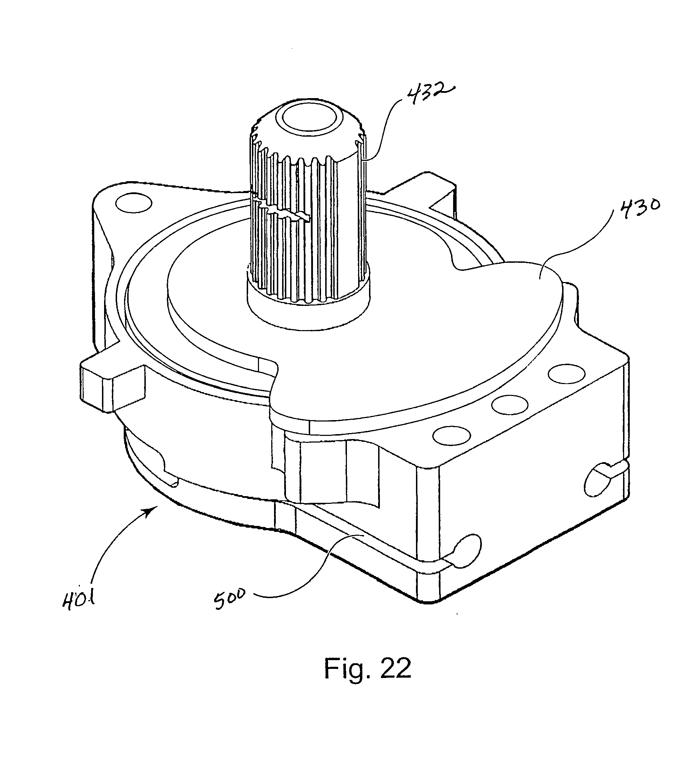

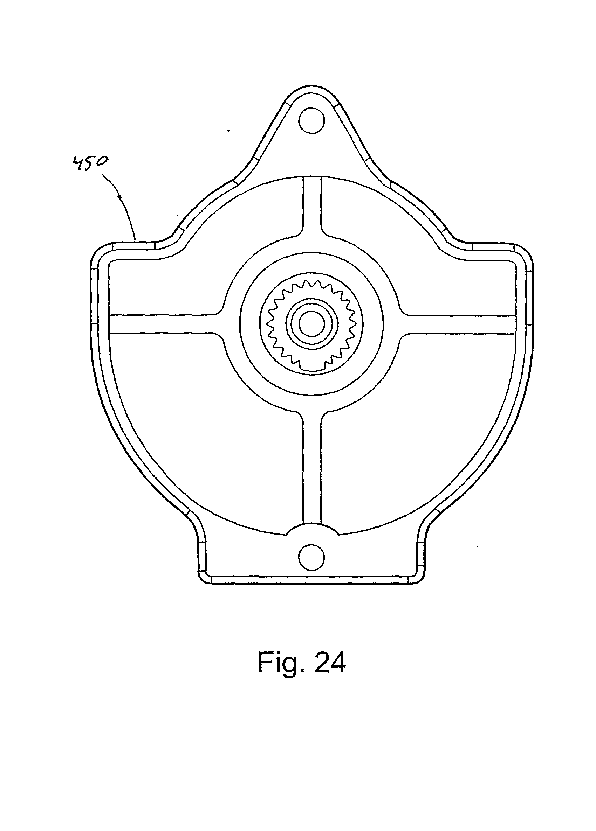

Next, with reference to Figs. 19 through 27, a double clutch actuator will be explained which is, however, not an embodiment of the present invention.

Referring to Figure 19, in operation a seat occupant turns lever arm (not shown) which rotates drive shaft, 432. Drive shaft, 432, drives disk, 405, through an upper clutch in a manner fully described below.

The downwardly disposed fingers 440 of disk, 405, engage the bosses of eccentric hub, 404, also driving it in the same rotational direction as disk, 405, and drive shaft, 432. Eccentric hub, 404, through notched extension, 508, of pulley, 406, drives pulley, 406, in the same rotational direction. Rotation of pulley, 406, either draws in or plays out Bowden Cable wire, 80, which is partially wrapped around pulley, 406, through one of the holes, 504, of base housing, 401. Accordingly, tension on Bowden Cable wire, is increased or decreased causing a corresponding narrowing or widening of the space between mounting brackets, 66 and 64, on lumbar support, 50, which in turn increases or decreases an arch in pressure rods, 68 (Figure 1).

The return wheel, 430, is driven to its home position after a drive rotation by homing spring, 409. The drive rotation of the homing wheel, 430, with its tabs, 418, puts spring, 409, under dynamic tension. After the seat occupant has taken the lever and drive shaft, 432, through its desired arc and releases pressure on lever arm, the spring, 409, is free to apply its pressure to tab, 418, of return wheel, 430, in order to push it, the drive shaft, 432, and lever back to their home position.

Spring, 409, is easily assembled by inserting it in channel, 510. Seats, 512, hold spring, 409, and have slots to allow tabs, 418, on return wheel, 430, to pass seats, 512, and compress the spring, 409.

As with the embodiment illustrated previously in top view Figure 6, the current exemplary double clutch actuator is pre-configured to allow lever arm, 88, to rotate 90 degrees in either direction. This corresponds to 16 millimeters of arcuate rotation of the pulley, 406, at the radius at which the Bowden Cable, 80, is seated in the preferred exemplary double clutch actuator. The total travel distance of the Bowden Cable wire, 80, is limited to 32 millimeters. Accordingly, to move the Bowden Cable, 80, and lumbar support the full 32 millimeters, two full 90 degree rotations of the lever arm are required. The 90 degree limitation is created by stops, 42, on top housing, 1.

### The Locking Hub Clutch

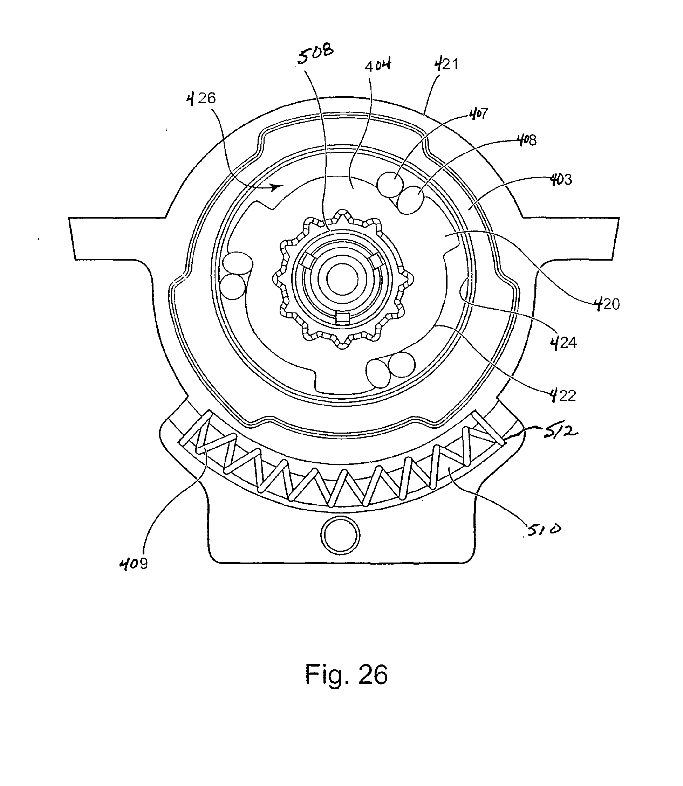

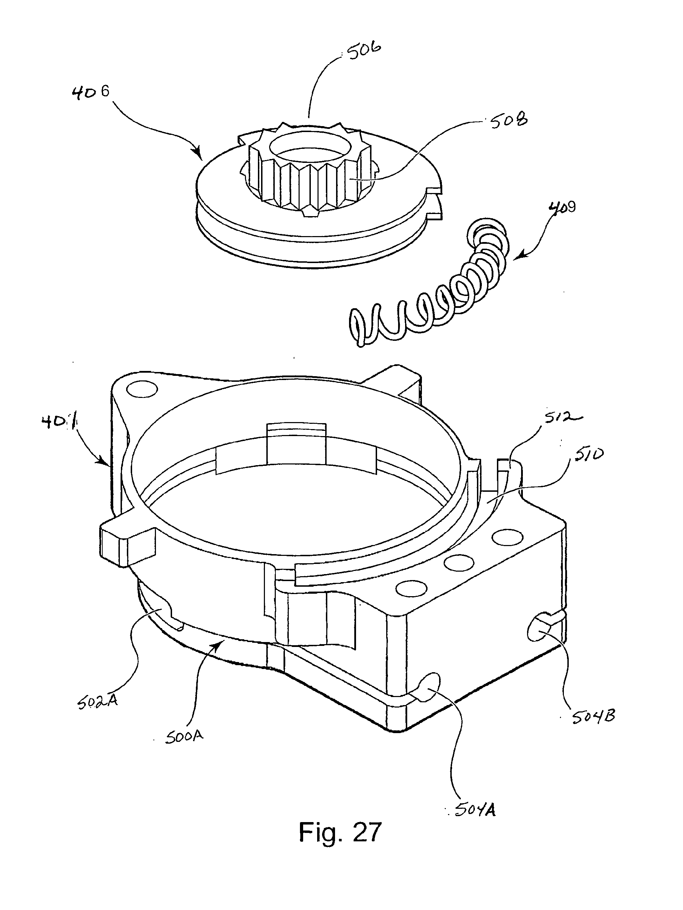

The locking clutch assembly operates according to the structure disclosed above. Figures 26 and 27 depict the locking clutch assembly installed in the base housing 401 of the exemplary double clutch actuator.

Rotation of drive shaft, 432, also drives one of fingers, 418, into compression of return biasing coil spring, 409. When the seat occupant releases the lever arm (not shown) the locking wedge action of the cam surfaces of the locking hub, holds locking hub and pulley, 406, at the degree of rotation selected by the seat occupant with the lever arm. Upper clutch and drive shaft, 432 remain free to move, however, and are driven to move to their home position by the expanding action of return biasing coil spring, 409, which pushes tabs, 418, on return wheel, 430 home.

### The Upper Clutch

The upper clutch operates in a cam and block fashion similar to the lower clutch, but bilaterally. Referring to Figure 19 drive disk, 405, has a concave axial seat, 414, for receiving the upper clutch components. Drive shaft, 432, is mounted in drive disk, 405, with a lower drive shaft, 412, extending therethrough and an upper, grooved drive shaft, 432, extending upwards. On the plane of the drive disk, 405, and within the seat, 414, of drive disk, 405, are drive shaft cam surfaces, 411. In the depicted alternative actuator drive shaft cams, 411, have three lobes. Also disposed in seat, 414 of drive disk, 405, are cam blocks, 402A and 402B. In the depicted alternative actuator, there are three pairs of cam blocks. Between each pair of cam blocks are disposed rubber grommets, 413. Between each pair of cam blocks are spaces, 428. Spaces, 428, receive upper dutch fingers, 410, which descend from homing wheel, 430.

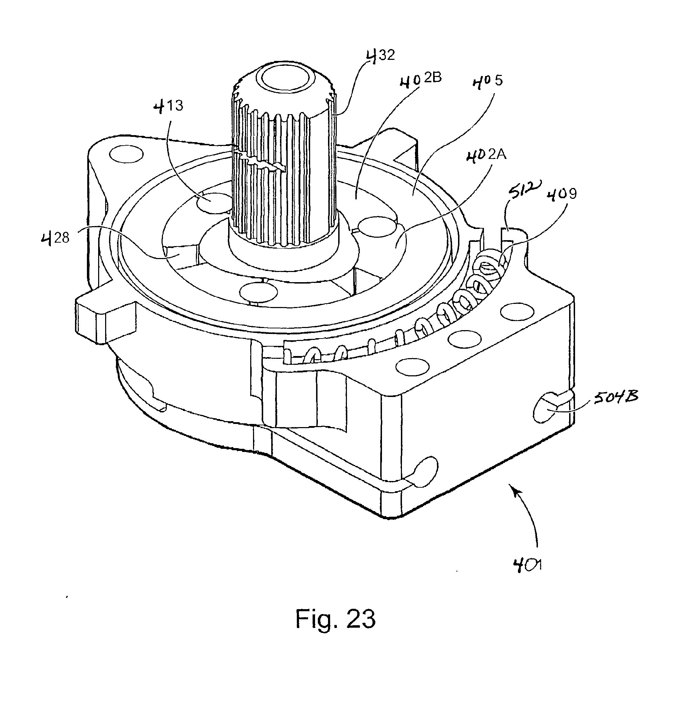

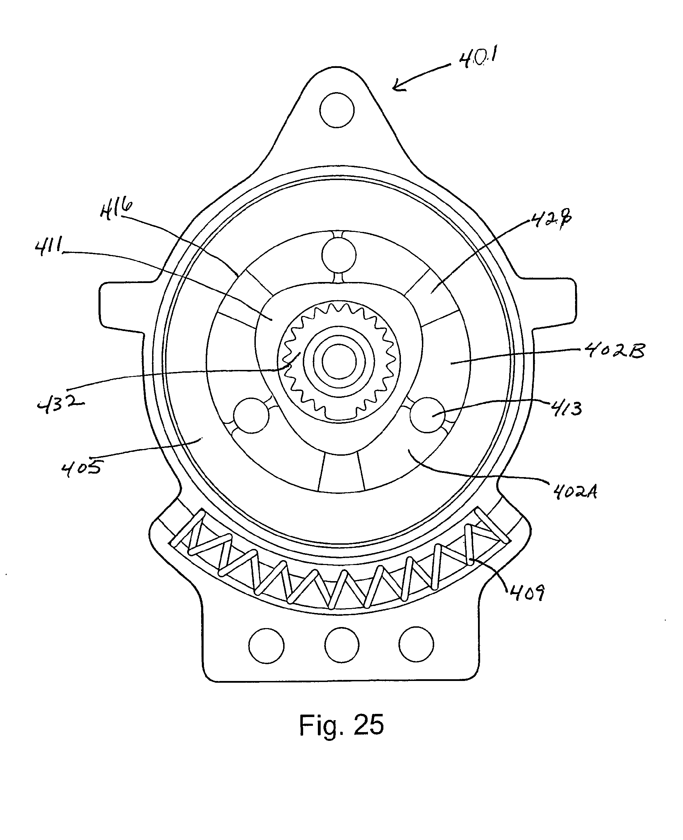

With reference now to Figures 23 and 25, in operation the upper clutch receives a rotational force from a seat occupant through a lever arm (not shown) which is fixed to drive shaft, 432. Assuming the seat occupant has chosen a clockwise rotation, each shaft cam lobe, 411, exerts pressure on cam blocks, 402A. Pressured cam blocks, 402A, compress grommets, 413, and transfer rotational force to cam blocks, 402B. This force, being directed into the wedge created between drive shaft cam lobes, 411, and the inner surface, 416, of drive disk, 405, transfer rotational force to the drive disk, 405. The force on drive disk, 405, is transferred to the lower fingers, 440, of drive disk, 405, and thereby into operating engagement of the lower locking clutch, described above.

Since the design of the upper clutch is symmetrical with regard to each cam block pair, 402A and 402B, and its interaction with drive shaft cam lobes, 411, the operation of the clutch is bilateral. Accordingly, in operation counterclockwise force may be transferred through the same method described herein.

Returning now to the clockwise example, return plate, 430, has been rotated clockwise by the clockwise motion exerted on the drive shaft by the seat occupant, because its fingers, 410, have been driven clockwise by their contact with cam blocks, 402B. This driven rotation brings one of spring tabs, 418, of return plates, 430, through slots in seat, 512, and into engagement with coil return spring, 409, compressing it. When the seat occupant releases the clockwise force on the drive shaft, this compressing action on return coil spring, 409, is released, allowing it to expand. Expansion of return coil spring, 409, pushes return wheel tab, 418, counterclockwise which, in turn, also pushes return wheel, 430, fingers, 410, counterclockwise. This counterclockwise force on the fingers, 410, unload the wedged cam blocks, 402B, from their jammed position in the wedge created between drive shaft cam lobes, 411, and drive disk inner surface, 416. This unloading of pressure between the cam blocks, 402B, and the drive disk, 405, allow the drive disk to return to the home position, where the seat occupant may stop and select the position currently locked into place by the lower locking clutch, or may elect to turn the lever again, advancing the ergonomic support surface further.

In view of the foregoing, it will be seen that the several advantages of the invention are achieved and attained.

The embodiments were chosen and described in order to best explain the principles of the invention and its practical application to thereby enable others skilled in the art to best utilize the invention and various embodiments and with various modifications as are suited to the particular use contemplated.

As various modifications could be made in the constructions and method herein described and illustrated without departing from the scope of the invention, it is intended that all matter contained in the foregoing description or shown in the accompanying drawings shall be interpreted as illustrative rather than limiting. Thus, the breadth and scope of the present invention should not be limited by any of the above-described exemplary embodiments, provided the invention still remains defined by the claims.

## Claims

1. A return actuator having a housing (1, 2; 201, 202), a pulley (6; 206) in rotating communication with the housing (1, 2; 201, 202), the pulley (6; 206) being adapted to draw a traction element (74, 80), the return actuator further comprising:
a. a one-way locking clutch (3-5, 7, 8; 203, 204, 207, 208) encapsulated by the housing (1, 2; 201, 202) and disposed to control rotation of the pulley (6; 206) such that the pulley (6; 206) locks against force exerted on the pulley by the traction element (74, 80);
b. a drive gear (10; 210) in rotational driving communication with the pulley (6; 206) through said one-way locking clutch;
c. a ratchet (11; 211A, 211B) in driving engagement with teeth of said drive gear (10; 210); and
d. a lever (88, 12; 220) from which said ratchet (11; 211A, 211B) is hanging for driving engagement with the teeth of said drive gear (10; 210) and rotationally fixed to the housing (1, 2; 201, 202).

2. The actuator of claim 1, wherein said one-way locking clutch is comprised of a hub with three bosses (160; 360), three rollers (7; 208) disposed between said bosses (160; 360) and three springs (8; 207) disposed between said bosses (160; 360) and said rollers (7; 208).

3. The actuator of claim 1, wherein said lever is a hand wheel.

4. The actuator of claim 1, wherein turning said lever draws a wire (80) of said traction element axially through a conduit of said traction element.

5. The actuator of claim 1, further **characterized by** an ergonomic device (50) actuated through said actuator when said lever (88) is turned.

6. The actuator of claim 1, wherein said traction element is a compression element.

7. The actuator of claim 1, further **characterized by**:
a lever housing boss (148);
a housing boss (146), said housing boss (146) being proximate to said lever housing boss (148) when said lever (88) is in a home position; and
a homing spring (9) disposed to bias said lever housing boss (148) and said housing boss (146) towards said proximate position.

8. The actuator of claim 7, wherein said homing spring (9) is a coil spring.

9. The actuator of claim 1, wherein said one-way locking clutch is further **characterized by**:
a hub (4; 204) having at least one boss (160; 360) and having at least one cam surface,
a ring (3; 203) in closed, rotating communication with said at least one boss, said ring (3; 203) having an inner surface defining a space between said inner surface of said ring (3; 203) and said cam surface of said hub (4; 204), said space having a wide portion and a narrow portion,
at least one roller (7; 208) disposed in said space and dimensioned to lock said clutch when said roller (7; 208) is in said narrow portion of said space and said roller (7; 208) being dimensioned to allow rotation of said hub when said roller (7; 208) is in said wide portion of said space,
at least one roller spring (8; 207) disposed in said space to bias said roller (7; 208) towards said narrow portion of said space, and
at least one lower finger (166; 366) disposed in said space to drive said roller toward said wide portion of said space.

10. The actuator of claim 9, wherein said at least one roller is eccentric in shape.

11. The actuator of claim 9, wherein said ring inner surface is eccentric in shape.

12. The actuator of claim 9, wherein said at least one roller spring (8; 207) is a rubber cylinder.

13. The actuator of claim 1, wherein said traction element (74, 80) has an end anchored to the pulley (6; 206) such that rotation of the pulley (6; 206) draws the traction element.

14. The actuator of claim 13, wherein said traction element is a Bowden cable (74, 80).

15. The actuator of claim 1, further **characterized by** a first end of the traction element (80) anchored to the pulley (6; 206) such that rotation of the pulley (6; 206) draws said traction element, and a second end of the traction element (80) in operative communication with an ergonomic device (50).

16. The actuator of claim 15, wherein said ergonomic device is a lumbar support (50).

## Patentansprüche

1. Rückstellbetätigungsvorrichtung, welche ein Gehäuse (1, 2; 201, 202), eine Seilrolle (6; 206) in einer drehenden Verbindung mit dem Gehäuse (1, 2; 201, 202) aufweist, wobei die Seilrolle (6; 206) eingerichtet ist, um ein Zugelement (74, 80) zu ziehen, wobei die Rückstellbetätigungsvorrichtung weiterhin umfasst:
a. eine Einweg-Sperrkupplung (3-5, 7, 8; 203, 204, 207, 208), welche von dem Gehäuse (1, 2; 201, 202) eingekapselt ist und angeordnet ist, um eine Drehung der Seilrolle (6; 206) so zu steuern, dass die Seilrolle (6; 206) gegen eine auf die Seilrolle von dem Zugelement (74, 80) ausgeübte Kraft sperrt;
b. ein Antriebszahnrad (10; 210), welches über die Einweg-Sperrkupplung in einer drehenden antreibenden Verbindung mit der Seilrolle (6; 206) steht;
c. eine Sperrklinke (11; 211A, 211B) in einem antreibenden Eingriff mit Zähnen des Antriebszahnrads (10; 210); und
d. einen Hebel (88, 12; 220), von welchem die Sperrklinke (11; 211A, 211B) für einen antreibenden Eingriff mit den Zähnen des Antriebszahnrads (10; 210) herabhängt und welcher drehend an dem Gehäuse (1, 2; 201, 202) befestigt ist.

2. Betätigungsvorrichtung nach Anspruch 1, wobei die Einweg-Sperrkupplung eine Nabe mit drei Ansätzen (160; 360), drei zwischen den Ansätzen (160; 360) angeordnete Rollen (7; 208) und drei zwischen den Ansätzen (160; 360) und den Rollen (7; 208) angeordnete Federn (8; 207) umfasst.

3. Betätigungsvorrichtung nach Anspruch 1, wobei der Hebel ein Handrad ist.

4. Betätigungsvorrichtung nach Anspruch 1, wobei ein Drehen des Hebels einen Draht (80) des Zugelements axial durch einen Kanal des Zugelements zieht.

5. Betätigungsvorrichtung nach Anspruch 1, welche weiterhin **gekennzeichnet ist durch** eine ergonomische Einrichtung (50), welche über die Betätigungsvorrichtung betätigt wird, wenn der Hebel (88) gedreht wird.

6. Betätigungsvorrichtung nach Anspruch 1, wobei das Zugelement ein Kompressionselement ist.

7. Betätigungsvorrichtung nach Anspruch 1, weiterhin **gekennzeichnet durch**:
einen Hebelgehäuseansatz (148);
einen Gehäuseansatz (146), wobei der Gehäuseansatz (146) dem Hebelgehäuseansatz (148) benachbart ist, wenn sich der Hebel (88) in einer Ruheposition befindet; und
eine Rückstellfeder (9), welche angeordnet ist, um den Hebelgehäuseansatz (148) und den Gehäuseansatz (146) in Richtung der benachbarten Position vorzuspannen.

8. Betätigungsvorrichtung nach Anspruch 7, wobei die Rückstellfeder (9) eine Schraubenfeder ist.

9. Betätigungsvorrichtung nach Anspruch 1, wobei die Einweg-Sperrkupplung weiterhin **gekennzeichnet ist durch**:
eine Nabe (4; 204), welche wenigstens einen Ansatz (160; 360) und wenigstens eine Nockenfläche aufweist,
einen Ring (3; 203) in einer geschlossenen drehenden Verbindung mit dem wenigstens einen Ansatz, wobei der Ring (3; 203) eine Innenfläche aufweist, welche einen Raum zwischen der Innenfläche des Rings (3; 203) und der Nockenfläche der Nabe (4; 204) definiert, wobei der Raum einen breiten Abschnitt und einen schmalen Abschnitt aufweist,
wenigstens eine Rolle (7; 208), welche in dem Raum angeordnet ist und bemessen ist, um die Kupplung zu sperren, wenn sich die Rolle (7; 208) in dem schmalen Abschnitt des Raums befindet, und wobei die Rolle (7; 208) bemessen ist, um eine Drehung der Nabe zu ermöglichen, wenn sich die Rolle (7; 208) in dem breiten Abschnitt des Raums befindet,
wenigstens eine Rollenfeder (8; 207), welche in dem Raum angeordnet ist, um die Rolle (7; 208) in Richtung des schmalen Abschnitts des Raums vorzuspannen, und
wenigstens einen unteren Finger (166; 366), welcher in dem Raum angeordnet ist, um die Rolle in Richtung des breiten Abschnitts des Raums anzutreiben.

10. Betätigungsvorrichtung nach Anspruch 9, wobei die wenigstens eine Rolle exzentrisch geformt ist.

11. Betätigungsvorrichtung nach Anspruch 9, wobei die Ringinnenfläche exzentrisch geformt ist.

12. Betätigungsvorrichtung nach Anspruch 9, wobei die wenigstens eine Rollenfeder (8; 207) ein Gummizylinder ist.

13. Betätigungsvorrichtung nach Anspruch 1, wobei das Zugelement (74, 80) ein an der Seilrolle (6; 206) verankertes Ende aufweist, so dass eine Drehung der Seilrolle (6; 206) das Zugelement zieht.

14. Betätigungsvorrichtung nach Anspruch 13, wobei das Zugelement ein Bowdenzug (74, 80) ist.

15. Betätigungsvorrichtung nach Anspruch 1, welche weiterhin **dadurch gekennzeichnet ist, dass** ein erstes Ende des Zugelements (80) an der Seilrolle (6; 206) verankert ist, so dass eine Drehung der Seilrolle (6; 206) das Zugelement zieht, und dass ein zweites Ende des Zugelements (80) in einer funktionsfähigen Verbindung mit einer ergonomischen Einrichtung (50) steht.

16. Betätigungsvorrichtung nach Anspruch 15, wobei die ergonomische Einrichtung eine Lendenstütze (50) ist.

## Revendications

1. Actionneur de retour comprenant un logement (1, 2 ; 201, 202), une poulie (6 ; 206) en liaison rotative avec le logement (1, 2 ; 201, 202), la poulie (6 ; 206) étant adaptée pour tirer un élément de traction (74, 80), l'actionneur de retour comprenant en outre :
a. un embrayage unidirectionnel de blocage (3-5, 7, 8 ; 203, 204, 207, 208) encapsulé par le logement (1, 2 ; 201, 202) et agencé de manière à contrôler la rotation de la poulie (6 ; 206) de sorte que la poulie (6 ; 206) se bloque contre la force exercée sur la poulie par l'élément de traction (74, 80) ;
b. un pignon d'entraînement (10 ; 210) en liaison d'entraînement tournant avec la poulie (6 ; 206) par l'intermédiaire dudit embrayage unidirectionnel de blocage ;
c. un cliquet (11 ; 211A, 211B) en prise d'entraînement avec les dents dudit pignon d'entraînement (10 ; 210) ; et
d. un levier (88, 12 ; 220) à partir duquel est suspendu ledit cliquet (11 ; 211A, 211B) pour une mise en prise d'entraînement avec les dents dudit pignon d'entraînement (10 ; 210) et fixé de manière rotative au logement (1, 2 ; 201, 202).

2. Actionneur selon la revendication 1, dans lequel ledit embrayage unidirectionnel de blocage comprend un moyeu à trois bossages (160 ; 360), trois galets (7 ; 208) disposés entre lesdits bossages (160 ; 360) et trois ressorts (8 ; 207) disposés entre lesdits bossages (160 ; 360) et lesdits galets (7 ; 208).

3. Actionneur selon la revendication 1, dans lequel ledit levier est une manette à main.

4. Actionneur selon la revendication 1, dans lequel ledit levier tire un câble (80) dudit élément de traction axialement à travers un conduit dudit élément de traction.

5. Actionneur selon la revendication 1, **caractérisé en outre par** un dispositif ergonomique (50) commandé par l'intermédiaire dudit actionneur lorsque ledit levier (88) est tourné.

6. Actionneur selon la revendication 1, dans lequel ledit élément de traction est un élément de compression.

7. Actionneur selon la revendication 1, **caractérisé en outre par** :
une protubérance de boîtier de levier (148) ;
un bossage de logement (146), ledit bossage de logement (146) étant proche de ladite protubérance de boîtier de levier (148) lorsque ledit levier (88) est dans une position de repos ; et
un ressort de retour (9) agencé de telle manière à solliciter ladite protubérance de boîtier de levier (148) et ledit bossage de logement (146) en direction de ladite position proximale.

8. Actionneur selon la revendication 7, dans lequel ledit ressort de retour (9) est un ressort à enroulement.

9. Actionneur selon la revendication 1, dans lequel ledit embrayage unidirectionnel de blocage est **caractérisé en outre par** :
un moyeu (4 ; 204) comprenant au moins un bossage (160 ; 360) et présentant au moins une surface de came,
une bague (3 ; 203) en liaison fermée et rotative avec ledit ou chaque bossage, ladite bague (3 ; 203) présentant une surface intérieure définissant un espace entre ladite surface intérieure de ladite bague (3 ; 203) et ladite surface de came dudit moyeu (4 ; 204), ledit espace comportant une partie large et une partie étroite,
au moins un galet (7 ; 208) disposé dans ledit espace et dimensionné de telle manière à bloquer ledit embrayage lorsque ledit galet (7 ; 208) se trouve dans ladite partie étroite dudit espace, et ledit galet étant dimensionné pour permettre la rotation dudit moyeu lorsque ledit galet (7 ; 208) se trouve dans ladite partie large dudit espace,
au moins un ressort de galet (8 ; 207) disposé dans ledit espace afin de solliciter ledit galet (7 ; 208) en direction de ladite partie étroite dudit espace, et
au moins un doigt inférieur (166 ; 366) disposé dans ledit espace afin d'entraîner ledit galet en direction de la partie large dudit espace.

10. Actionneur selon la revendication 9, dans lequel ledit ou chaque galet est excentrique.

11. Actionneur selon la revendication 9, dans lequel ladite surface intérieure de bague est excentrique.

12. Actionneur selon la revendication 9, dans lequel ledit ou chaque ressort de galet (8 ; 207) est un cylindre en caoutchouc.

13. Actionneur selon la revendication 1, dans lequel ledit élément de traction (74, 80) comporte une extrémité ancrée à la poulie (6 ; 206) de telle manière que la rotation de la poulie (6 ; 206) tire l'élément de traction.

14. Actionneur selon la revendication 13, dans lequel ledit élément de traction est un câble Bowden (74, 80).

15. Actionneur selon la revendication 1, **caractérisé en outre en ce qu'**une première extrémité de l'élément de traction (80) est ancrée à la poulie (6 ; 206) de telle manière que la rotation de la poulie (6 ; 206) tire ledit élément de traction, et **en ce qu'**une second extrémité de l'élément de traction (80) est en communication fonctionnelle avec un dispositif ergonomique (50).

16. Actionneur selon la revendication 15, dans lequel ledit dispositif ergonomique est un soutien lombaire (50).
